**Europäisches Patentamt**

**European Patent Office**

**Office européen des brevets**

(19)

(11) Publication number: **0 027 485**
**B1**

(12) # EUROPEAN PATENT SPECIFICATION

(45) Date of publication of patent specification: **31.07.85**

(21) Application number: **79830039.8**

(22) Date of filing: **19.10.79**

(51) Int. Cl.⁴: **A 23 L 1/16,** A 21 B 5/02, A 21 C 11/24

(54) **A process for the production of cooked macaroni foods and a plant with which to effect the said process.**

(43) Date of publication of application:
**29.04.81 Bulletin 81/17**

(45) Publication of the grant of the patent:
**31.07.85 Bulletin 85/31**

(84) Designated Contracting States:
**AT BE CH DE FR GB LU NL SE**

(56) References cited:
**FR-A-2 301 183**
**US-A-2 366 366**
**US-A-2 615 809**
**US-A-3 267 877**
**US-A-3 481 284**
**US-A-3 830 946**

(73) Proprietor: **Falconi, Sergio**
**Via Alcide De Gasperi**
**I-64020 San Nicolo'a Tordino (Teramo) (IT)**

(72) Inventor: **Falconi, Sergio**
**Via Alcide De Gasperi**
**I-64020 San Nicolo'a Tordino (Teramo) (IT)**

**The file contains technical information submitted after the application was filed and not included in this specification**

## Description

The invention relates to a process for the production of cooked macaroni foods and to a plant with which to effect the said process.

The art currently in use for the production of macaroni foods consists in the preparation of a well amalgamated solid plastic dough, composed of flour, water, eggs and other ingredients in different combinations and percentages to suit the product it is wished to make.

Once the said solid-plastic dough has been kneaded sufficiently, it is subjected to a rolling out operation in one or more successive stages, depending upon the desired thickness of the dough, which is then cut and formed or is extruded to directly supply a formed product, such as spaghetti or noodles etcetera.

The finished product thus obtained can be eaten immediately in its fresh condition, after being first cooked in water, or else be put on the market dried out so as to guarantee its being kept for a long time; anyway it can always only be eaten after a more or less long and complex period of cooking, depending on the macaroni product used and the particular recipe chosen. Normally, however, no cooking, even partial, of the product takes place during the production thereof, except in certain special cases when the dough is cooked in water subsequently to the production rolling out or extrusion stage, prevalently for the preparation of canned or frozen "ready cooked dishes".

The object of the invention is to produce macaroni foods that are cooked partially or completely, according to the requirements, without water and without resorting to rolling out or extrusion operations to make the product in various forms, and wherein further cooking is not needed to eat it.

The said object is attained with the process forming the subject of the present invention, characterized by the following stages:

a) the preparation of a liquid mixture containing the basic ingredients needed to make the macaroni product, using water or milk, or both, to dilute the mixture, and using at least one binding ingredient;

b) the constant stirring of the said liquid mixture and, with the aid of one or more devices for nebulizing the said liquid mixture, the continuous or intermittent distribution of it on to at least one surface heated to the macaroni cooking temperature, with the said heated surface and the said nebulization devices being relatively movable to one another to produce a continuous dough that is cooked, contemporaneously with the production thereof, directly on the said heated surface.

According to one possible form of embodiment, the plant with which to effect the said process is envisaged having a first surface heated to the macaroni cooking temperature, rotating without the possibility of displacement or slippage with a continuous or intermittent unidirectional movement, and having the said nebulization devices positioned opposite the said heated surface; a second surface heated to the macaroni cooking temperature, rotating without the possibility of displacement or slippage with a continuous or intermittent unidirectional movement, at the same speed, though in the opposite direction, as the first heated surface and connected to the said first surface through transmission means that do not allow one to slip with respect to the other, the said second surface being rotatable around an axis parallel to the axis of rotation of the said first surface, the said second heated surface being so positioned as to face on to the said first heated surface, spaced away therefrom at a distance identical to the thickness of the product it is wished to make.

For the production of long products, such as spaghetti, products in strip form, such as noodles, and short products, contemporaneously with the formation and cooking stage it is envisaged that the said first and second heated surfaces be shaped in such a way as to circumferentially have a number of channels or pockets, separated by cutter members which, during the rotation of the said heated surfaces, divide the dough being formed and cooked thereon into pieces of the desired section, shape and length. Alternatively, the dough can be cut after it has been produced.

With the process and plant forming the subject of the present invention, it is possible to achieve the grouping together of the product forming, cooking and finishing stages, and in this way to limit what the consumer has to do just to adding a condiment to the product or, when it is not eaten in a fresh condition, placing the product in hot water for a few seconds in order that it may reacquire its "natural volume".

By using a liquid mixture, the process enables there to be an easier and more rapid amalgamation of the ingredients, whilst the subsequent nebulization makes it possible to produce a flexible, uniform food that has better physical characteristics and nutritive properties than products made in accordance with the conventional art.

For the preparation of the liquid mixture there is not, in fact, any compulsory limitation in the use of ingredients, such as, for example, eggs, in relation to the flour and, indeed, it is possible to use a higher percentage of eggs than is the case with conventional macaroni foods since there is no question of the mixture hardening or becoming sticky which, when adopting the processes known today, would prejudice the rolling out and/or the extrusion of the dough.

The characteristics and advantages of the process forming the subject of the present invention will emerge more clearly from the detailed description that follows of various possible forms of embodiment for the plant with which to effect the said process, illustrated purely as an unlimited example on the accompanying drawings, in which:

— Fig. 1 shows, diagrammatically in a front view, a first form of embodiment for the plant according to the invention, wherein two heated surfaces are used, on only one of which the dough is sprayed for the formation and the cooking thereof;

— Fig. 2 shows, diagrammatically in a front view, a second form of embodiment for the plant according to the invention, wherein two heated surfaces are used, on both of which the formation and the cooking of the product takes place, and by means of which two thicknesses are created which are united when leaving the said heated surfaces, either by contact or because of the arrival of more of the nebulized mixture, to form one single thickness;

— Fig. 3 shows a further form of embodiment for the plant which, in practice, results from combining in series the possibilities outlined in Figs. 1 and 2;

— Fig. 4 shows, in a lateral diagrammatic view with some parts in sectional form so that others may be seen better, a possible form of embodiment for the nebulization devices;

— Fig. 5 shows, in a profile view, a possible way in which the heated surfaces can be shaped suitably to produce a long product, such as spaghetti;

— Fig. 6 shows, in a profile view, a possible way in which the heated surfaces can be shaped and combined suitably to produce a long product, such as noodles;

— Fig. 7 shows, diagrammatically, a further possible form of embodiment for the plant according to the invention, wherein the heated surfaces that contribute to the formation and cooking of the product are flat and movable, one with respect to the other;

— Fig. 8 shows, diagrammatically, a further possible form of embodiment for the plant according to the invention, wherein the heated surfaces that contribute to the formation and cooking of the product are flat and cylindrical, respectively, both being movable synchronously at the same speed and in the same direction.

The first stage for the process forming the subject of the present invention consists in preparing a liquid mixture of the ingredients needed for the production of macaroni foods; for the dilution of which water or milk, or both, can be used.

The individual quantities of the various ingredients will depend on the type of macaroni food it is wished to produce. An ingredient having a binding function is, furthermore, necessary in order to guarantee the nebulized mixture having adequate consistency. The said ingredient can, for example, simply be the whole egg, just the white thereof, or any other suitable edible substance.

The liquid mixture is stirred continuously in order to prevent it from stratifying and to constantly have available a dough to the nebulized, which is amalgamated as much as possible. The mixture can, if necessary, contain ancillary ingredients that are able to give the product a particular green or pink type of colour, or a special protein-vitamin value. Thus, for example, various types of green vegetables can be used, as well as various sorts of flour, with care always being taken to maintain the necessary dilution and homogeneousness of the mixture.

The second stage in the process consists in forming the mixture into a finished product, that is to say, into a cooked macaroni food of the desired thickness.

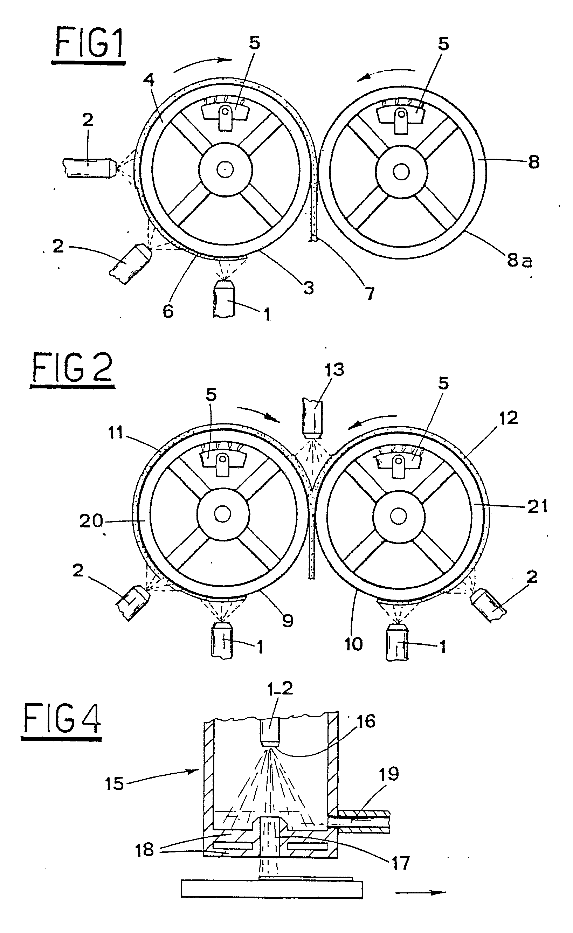

To achieve this second stage, and with reference to the example given in Fig. 1, nebulizer devices as at (1) and (2) can be used, these being supplied from the tank in which the liquid mixture is contained (not depicted in the figures), whose task is to distribute the liquid mixture on to a working surface (3), the said nebulizer devices being placed one after the other. The said working surface (3) is shown in Fig. 1 in cylindrical form, formed by a drum (4) with a rotatory movement, and the former is subjected to the heating action of one or more sources of heat (5) of suitable type which are placed in various positions in order to obtain a maximum distribution of the heat and uniformity of the temperature applied to the said working surface (3).

Distribution of the heat, uniformity of the temperature and the rotation speed are interdependent factors to enable the nebulized liquid mixture to be cooked perfectly and to subsequently be removed from the working surface (3), as well as, naturally, to allow there to be a satisfactory production rate.

The optimum temperature range for the cooking of the product is between 75°C and 150°C taken on the working surface (3) which obviously has to be made of high thermal conductivity material and be perfectly smooth. The said range of temperatures depends on the intrinsic characteristics of the mixture, on the speed at which the working surface (3) rotates, and, therefore, on the optimum cooking temperature and times, as well as on the type of nebulization used.

During the second stage in the carrying out of the process in question, when the first layer of the mixture (6) distributed by the nebulizer device (1) comes into contact with the working surface (3), it tends to dry quickly (the water contained in it being vapourized, which contributes in rendering the mixture flexible) and to become the first cooked layer of the mixture, which subsequently facilitates the removal of the cooked dough (7) from the working surface (3).

With the example given in Fig. 1, various further layers are added to the first layer of the mixture by the nebulizer devices (2) until the thickness desired for the cooked dough (7) has been attained. The said subsequent layers contribute contemporaneously in preventing the first layer of the mixture (6) from drying out excessively since, if it were to become ultra-friable, the removal of the cooked dough (7) could be rendered difficult. Again, according to the example given in Fig. 1, the drum (4) that carries the cooked dough (7) is coupled to a second drum (8) having a peripheral surface (8a), which also operates at the operating temperature, in convergent rotation with the drum (4), and at the same speed as this, the task of which is to give a finishing touch to the cooking of the upper surface of the cooked dough (7) and to facilitate its removal from the drum (4) through the shrinkage effect of the fibres in the said cooked dough.

In order to prevent any slippage between the heated surfaces (3) and (8a), the drums (4) and (8) can be connected to one another through the use of rigid transmission means of a known type, not described herein.

According to the example illustrated in Fig. 2, the macaroni food is produced on two separate working surfaces (9) and (10) belonging to the drums (20) and (21), respectively, which counter-rotate, one with respect to the other, and cause the two layers (11) and (12) to be stuck together, the union being assisted by the prior distribution of a further quantity of the liquid mixture through a nebulizer device (13), positioned suitably with respect to the said working surfaces.

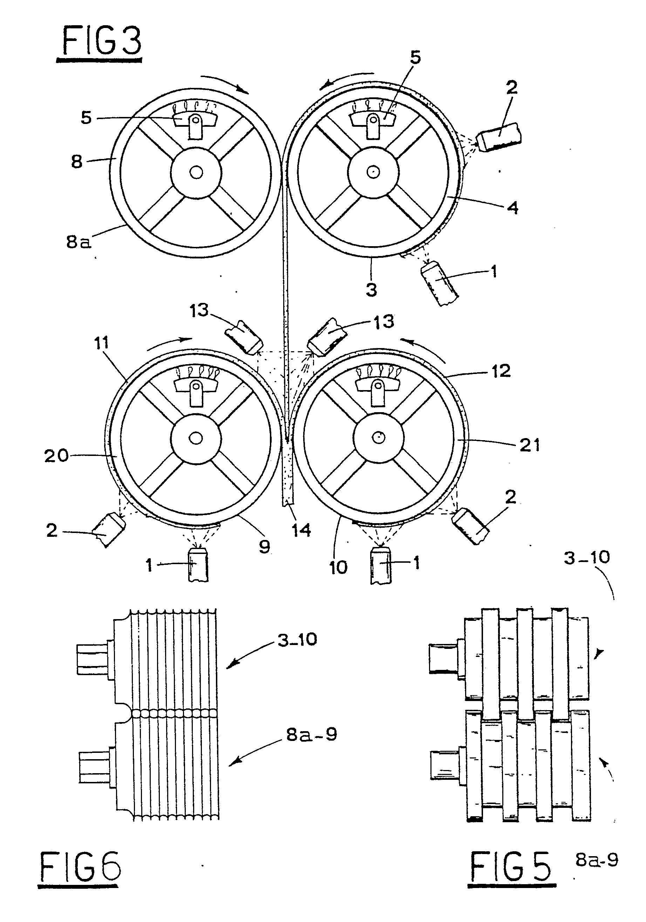

The above described solutions can be adopted in succession, as shown in Fig. 3, in order to achieve the optimum cooking of the dough (14) and the thickness and finish desired for it.

It is necessary, at the time the nebulized liquid mixture is being distributed on to the working surface (3), or on to the working surfaces (9) and (10), that it does not "run" because the amount is being excessive and flow over the outside border, thereby giving rise to the formation of peripheral burr which would hamper the removal of the cooked dough.

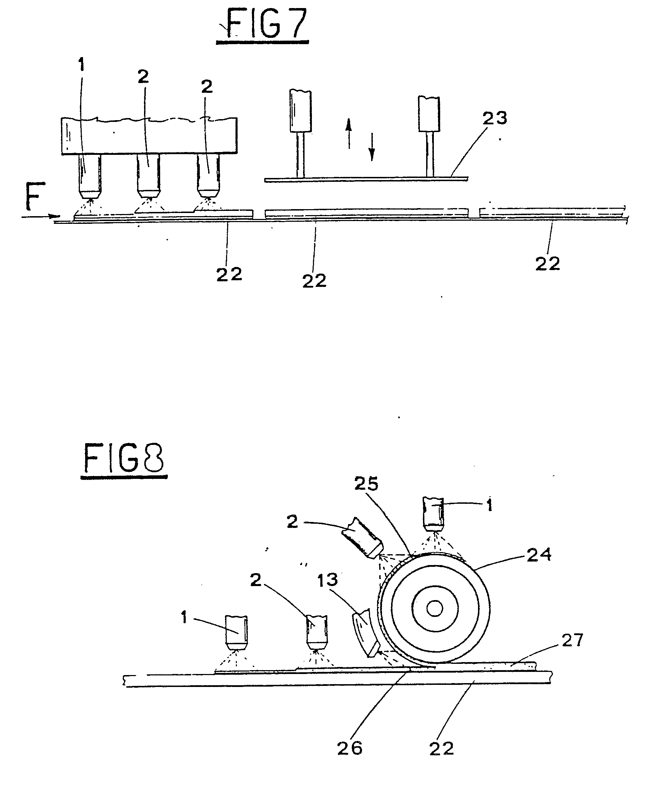

In this connection, the devices shown by way of an example in Fig. 4 are provided and with these, which are numbered (15) therein, it is possible to regulate and render uniform the jet of mixture coming from the nozzle (16) of the nebulizer device (1) or (2). The said devices (15) are provided at the bottom thereof, in the region of a mixture jet expulsion aperture (17), with heat insulation members (18) which are able to protect the liquid mixture collected therein, from the heat coming from the neighbouring working surface. Furthermore, the said devices (15) have an exit duct (19) for the recovery of the excess liquid mixture accumulated therein.

Once the dough has been cooked contemporaneously with the production thereof in accordance with the foregoing description, one is able to proceed with the cutting and packing operation through the use of the normal techniques known today.

As regards the production of macaroni foods of the spaghetti, noodle, etcetera, variety, the formation operation, normally performed at a stage subsequent to the production of the dough can with the present invention, also be achieved contemporaneously with the cooking by having the working surfaces (3), (8a), (9) and (10) on to which the liquid mixture is sprayed, shaped and coupled reciprocally (see Figs. 5 and 6), to suit the desired shape, with the utmost attention being placed on guaranteeing the uniformity of the temperature and the smoothness of the surface.

Alternatively to the foregoing and with reference to Fig. 7, the working surfaces (3) and (8a) can be replaced with the heated flat surfaces (22) and (23), positioned at different levels and connected to corresponding means of support.

A number of the surfaces (22) can be arranged, one after the other, suitably linked up to corresponding sources of heat, and connected to conveyor devices, not illustrated on the drawings, which move them in successive steps towards the surface (23), in the direction of the arrow F, underneath one or more nebulizer devices (1) and (2) placed, when there are several of them, one following on after the other, and actuated in synchronism with the forward movement of the said surfaces.

When the surface (22) arrives underneath the surface (23) and during the halting time of the said surfaces (22), the surface (23) is carried into contact with the upper face of the dough formed and being cooked on the surface (22), and this gives the finishing touch to the cooking of the other side of the said dough.

In another possible form of embodiment for the said plant, illustrated in Fig. 8, the said flat surface (23) is substituted by a cylindrical surface (24), connected to corresponding means of support, not depicted, which is heated to the product cooking temperature through a source of heat positioned suitably with respect to the said cylindrical surface, which is also not shown on the drawings. On the perimeter of the said cylindrical surface (24) one or more nebulizer devices (1) and (2), as in the cases previously described, can be placed, as well as one or more of the nebulizer devices (13) should, for the union of the parts (25) and (26) of the finished product (27), it should not be wished to rely on the simple contact between the parts.

## Claims

1. Process for the production of cooked macaroni foods prepared with normal basic ingredients, characterized by the following stages:

a) preparation of a liquid mixture containing the ingredients necessary to make the macaroni product using water or milk, or both, to dilute the mixture, using at least one binding ingredient;

b) the constant stirring of said liquid mixture;

c) the nebulization of said liquid mixture, continuous or intermittent, by means of one or more nebulization devices, for the distribution of the mixture onto at least one surface heated to a temperature chosen between 75°C and 150°C according to the degree of cooking desired and to the size and technical characteristics of the plant;

— said heated surface and said nebulization devices being relatively movable to one another to produce a continuous dough which is cooked contemporaneously with the production thereof, on the same said heated surface.

2. A plant for the carrying out of the process of claim 1, comprising the following essential features:

— a first surface heated (3) to a temperature chosen between 75°C and 150°C, according to the degree of cooking desired for the dough and to the size and technical features of the plant;

said surface (3) being the surface of a first drum (4) rotating with a unidirectional, continuous or intermittent movement, with the task of supporting the dough;

— nebulization devices (1, 2), with the task of forming several layers, positioned in the proximity of said first heated surface (3) and oriented towards it;

— a second surface heated (8a) to the same temperature of the first said surface (3), with the task of aiding in the removal of the cooked dough from the said first surface (3); said second surface, being the surface of a drum (8) rotating with a unidirectional, continuous or intermittent movement, at the same speed as the first said drum (4), but in the opposite direction;

the said second drum (8) being connected with the first said drum (4) by means of transmission means that prevent their reciprocal slipping:

the said first (4) and second (8) drums being mounted on axis parallel the one to the other, and

the said first (3) and second (8a) surfaces being at a distance from one another equal to the thickness of the product formed on the first said surface (3).

3. A plant according to claim 2 in which is provided, as a surface for the production of dough, a second surface (10), heated to the same temperature of a first surface (9), representing the surface of a second drum (21) operating at the same speed and in the opposite direction of a first drum (20) and mounted on an axis parallel to that of the first drum (20), and connected to the latter by means of transmission that prevent their reciprocal slipping, the said second surface (10) being placed at a distance from the first surface (9) equal to the sum of the thicknesses of the products formed by the two surfaces (9, 10), the said nebulization devices (1, 2) being then placed also in the proximity of the said second surface (10), further nebulization devices (13) being placed above said surfaces (9, 10), in proximity of their contacting line, to feed the mixture so as to ensure the union of the two products.

4. A plant for the carrying out of the process according to claim 1, consisting in a first couple of surfaces (3, 8a) according to claim 2, set above a second couple of surfaces (9, 10) according to claim 3, in which:

— the product coming down from the first said couple of surfaces (3, 8a) contributes to increase the thickness of the products obtained from the surfaces (9, 10) of the second said couple and to form an unified product (14) of a thickness equal to the sum of the three products;

— nebulizers (13) are provided at opposite sides of the product coming down from the first said couple of surfaces (3, 8a) and directed towards the confluence point of the products formed separately by the second couple of surfaces (9, 10);

— means of transmission are provided, capable of preventing the slipping of the first said couple of surfaces (3, 8a) with respect to the second said couple of surfaces (9, 10);

— the rotation speed is the same for all the surfaces (3, 8a; 9, 10) belonging respectively to the drums (4, 8; 20, 21).

5. A plant for the carrying out the process according to claim 1, characterized by:

— a first heated flat surface (22), connected with a conveying device furnished with a unidirectional, intermittent movement;

— means of nebulization (1, 2) of said mixture placed above said first heated flat surface (22), oriented towards it and operating synchronously with the movement of the conveying device;

— a second flat surface (23), heated to the temperature of said first surface (22), vertically movable to provide instantaneous contact, without pressing, with the product obtained on the said first surface (22) in the stage following the nebulization, said vertical movement taking place in coincidence with the interruptions in the movement of the conveying device.

6. A plant according to claim 3 and 5, modified in that said second surface is a cylindrical surface (24) having a movement of rotation and not of translation, supported by known means and heated to the temperature of the first flat surface (22) having a translating alternate movement;

— in proximity to said cylindrical surface (24) nebulization means (1, 2) being directed towards said cylindrical surface (24);

— in proximity to the confluence of the product (25, 26) further means of nebulization being provided (13) to feed the mixture in order to ensure the union of the products and to form the finished product (27);

— the said second cylindrical surface (24) having also a movement of translation, while the said first flat surface (22) remains at a standstill.

7. A plant according to claims 2 to 5, characterized by the said first and second heated surfaces (3, 8a; 9, 10) which have a contour having the function of defining the shape and of executing the cutting of the product during their reciprocal movement.

8. A plant according to claims 2 to 6, characterized by said means of nebulization, which are supplied with means (15) which limit the area over which the mixture is distributed, said means being supplied with insulating surfaces (18) and with a duct for the recovery (19) of the mixture.

**Patentansprüche**

1. Herstellungsverfahren für gekochte Teigwaren mit normalen Grundzutaten; es wird von folgenden Arbeitsgängen charakterisiert:

a) Vorbereitung einer flüssigen Mischung, welche die den Teigwaren nötigen Zutaten enthält; um die Mischung zu dünnen, werden Wasser oder Milch oder beides und wenigstens ein bindendes Mittel verwendet;

b) Stetiges Rühren der flüssigen Mischung,

c) Stetige oder gelegentlich intervallweise Zerstäubung der obengenannten flüssigen Mischung durch eines oder mehrere Zerstäubungsmittel, zur Verteilung der Mischung auf wenigstens eine auf die Temperatur zwischen 75°C oder 150°C, nach der gewünschten Kochstufe, Dimension und technischen Charakteristiken der Anlage, erwärmte Fläche;

— obengenannte erwärmte Fläche und obengenannte Zerstäubungsmittel sind relativ zueinander beweglich, um eine ununterbrochene Masse herzustellen, die gleichzeitig mit ihrer Herstellung auf derselben erwärmten Fläche gekocht wird.

2. Eine Anlage, die folgende nötige Eigenschaften umfasst zur Anwundung des Patentanspruchs 1:

— eine erste auf die Temperatur zwischen 75°C und 150°C, je nach erwünschtem Kochgrad des Teigs, Dimension und technischen Charakteristiken der Anlage erwärmte Fläche (3);

— obengenannte Fläche (3) ist die Fläche einer ersten stetig oder intermittierend drehenden, einseitig gerichteten Trommel (4) die als Teigträger wirkt;

— Zerstäubungsgeräte (1, 2), die zur Bildung von verschiedenen Schnichten bestimmt sind, sind neben genannter erster erwärmter Fläche (3) gesetzt und zu dieser gerichtet;

— eine zweite auf gleiche Temperatur wie erste Fläche (3) erwärmte Fläche (8a) wirkt als Hilfe beim Entfernen des gekochten Teigs von der genannten ersten Fläche (3);

diese zweite Fläche ist die einer stetig oder intermittierend drehenden einseitig gerichteten Trommel (8) mit derselben Geschwindigkeit wie die erste obengenannte Trommel (4) aber in entgegengesetzter Richtung;

die obengenannte zweite Trommel (8) ist mit der ersten genannten Trommel (4) durch Antriebsmittel verbunden, die das gegenseitige Rutschen verhindern;

die genannten erste (4) und zweite (8) Trommel sind auf parallellaufenden Achsen montiert, und

die obengenannten erste (3) und zweite (8a) Flächen sind voneinander in einer Entfernung, die der Dicke des auf der ersten obengenannten Fläche (3) gebildeten Produktes entspricht.

3. Eine Anlage nach Patentanspruch 2, an der als eine Fläche für die Teigherstellung eine zweite auf dieselbe Temperatur der ersten Fläche (9) erwärmte Fläche (10) vorgesehen ist, die die Fläche einer zweiten Trommel (21) derstellt; diese zweit Trommel wirkt mit derselben Geschwindigkeit und in entgegengesetzer Richtung einer ersten Trommel (20), und ist auf einer Achse montiert, die derjenigen des ersten Trommels (20) parallelläuft und ist letzterer durch Antriebsmittel verbunden, die deren gegenseitiges Rutschen verhindern,

die genannte zweite Fläche (10) befindet sich von der ersten Fläche (9) in einer Entfernung, die der Summe der Dicken der von den zwei Flächen (9, 10) gebildeten Produkte entspricht, obengenannte Zerstäubungsgeräte (1, 2) befinden sich in diesem Falle auch in der Nähe der obengenannten zweiten Fläche (10),

andere Zerstäubungsgeräte (13) befinden sich über den genannten Flächen (9, 10) und zwar in der Nähe von deren Berührungslinie, um die Mischung zu versorgen und die Mengung der zwei Produkte sicherzustellen.

4. Eine Anlage zur Realisierung des Herstellungsverfahrens nach Patentanspruch 1, sie besteht aus einer ersten paarweisen Anordnung von Flächen (3, 8a) nach Patentanspruch 2, die über einem zweiten Flächenpaar (9, 10) nach Patentanspruch 3 angebaut sind, wo:

— das von dem ersten obengenannten Paar Flächen (3, 8a) herabkommende Produkt trägt dazu bei, die Dicke der Produkte zu vergrössern, die von den Flächen (9, 10) des genannten zweiten Paars erzielt werden und ein gemeinsames Produkt (14) zu bilden, das die Dicke der drei gesamten Produkte hat;

— die Zerstäubungsgeräte (13) sind an den entgegengesetzten Seiten des von dem ersten genannten Flächenpaar (3, 8a) herunterkommenden Produktes vorgesehen der zur Vermischungspunkt der getrennt von dem zweiten Flächenpaare (9, 10) gebildeten Produkte gerichtet ist;

— Übertragungsgeräte sind vorgesehen, die das Rutschen des ersten obengenannten Flächenpaar (3, 8a) in Bezug der zweiten Flächenpaar (9, 10) verhindern sollen;

— die Drehgeschwindigkeit ist dieselbe für alle Flächen (3, 8a; 9, 10), die zu den jeweiligen Trommeln (4, 8; 20, 21) gehören.

5. Eine Anlage zur Realisierung des Herstellungsverfahrens nach Patentanspruch 1, charakterisiert von:

— einer ersten erwärmten platten Fläche (22); diese ist mit einem übertragungsgerät verbunden, das mit einseitiger untermittierender Bewegung ausgestattet ist;

— Zerstäubungsgeräte (1, 2) für die genannte Mischung, die über obengenannter erster platter und erwärmter Fläche (22) gesetzt und zu dieser gerichtet sind und gleichzeit in Synkronie mit der Bewegung des Übertragungsmittels wirken;

— eine zweite platte auf die Temperatur der genannten ersten Fläche (22) erwärmte, senkrecht bewegliche Fläche (23), um den sofortigen kontakt auszulösen, ohne Druck, mit dem auf der obengenannten ersten Fläche (22) erhaltenen Produkt in der Zerstäubung folgenden Phase; diese senkrechte Bewegung geschieht gleichzeitig mit der Unterbrechung der Bewegung des Fördergerätes.

6. Eine Anlage nach verändertem Patentanspruch 3 und 5, in der die obengenannte zweite Fläche eine Zylinderfläche (24) mit Rotationsbewegung und nicht mit Gangbewegung ist und von bekannten Mitteln getragen und auf die Temperatur der ersten platten Fläche (22), die eine alternierte Gangbewegung hat;

in der Nähe der genannten Zylinderfläche (24) Zerstäubungsmittel (1, 2) die sich zur genannten Zylinderfläche (24) gerichtet sind;

— in der Nähe der Konfluenz des Produktes (25, 26) sind andere Zerstäubungsgeräte (13) vorgeschen, um die Mischung zu nähren, die Einheit der Produkte zu gewährleisten und das fertige Produkt (27) zu erzeugen;

— genannte zweite Zylinderfläche (24) hat auch eine Fortgangbewegung während obengenannte erste glatte Fläche (22) stillstehend ist.

7. Eine Anlage, die den Patentansprüchen 2 bis 5 entspricht, ist gekennzeichnet von den genannten ersten und zweiten erwärmten Flächen (3, 8a; 9, 10), deren Umriss die Aufgabe hat, während ihrer wechselseitigen Bewegung die Form zu bestimmen und das Zerschneiden des Produktes auszuführen.

8. Eine den Patentansprüchen von 2 bis 6 entsprechende Anlage ist von obengenannten Zerstäubern charakterisiert; diese sind mit den Vorrichtungen (15) versehen, die den Raum begrenzen, auf welchen die Mischung zerstäubt wird; genannte Vorrichtungen sind mit isolierenden Flächen (18) und mit einer Rohrleitung (19) zur Wiedergewinn der Mischung verschen.

**Revendications**

1. Procédé de production de pâtes alimentaires cuites préparées avec ingrédients de base normaux, caractérisé par les phases suivantes:

a) préparation d'un mélange liquide contenant les ingrédients nécessaires à la préparation du produit de pâte en utilisant l'eau ou le lait, ou les deux, pour diluer le mélange en utilisant au moins un ingrédient liant;

b) le mélange constant du dit mélange liquide;

c) la nébulisation du dit mélange liquide, continuelle ou intermittent, par un ou plusieurs moyens de nébulisation, pour la distribution du mélange sur au moins une surface chauffée à une température choisie entre 75°C et 150°C suivant le degré de cuisson souhaité et la dimension et les caractéristiques techniques de l'installation;

— la dite surface chauffée et les moyens de nébulisation étant rélativement mouvables l'un à l'autre, pour produire une masse continue qui est cuite en même temps qu'elle est produite, sur la même surface chauffée.

2. Une installation pour l'accomplissement du procédé de la revendication 1, comprenant les suivantes caractéristiques essentielles:

— une première surface (3) chauffée à une température choisie entre 75°C et 150°C, suivant le degré de cuisson souhaité pour la masse, et la dimension et les caractéristiques techniques de l'installation;

la dite surface (3) étant la surface d'un premièr tambour (4) tournant avec un mouvement unidirectionnel, continuel ou intermittent, avec la tâche de support pour la masse;

— moyens de nébulisation (1, 2) avec la tâche de former plusieures couches, placés en proximité de la dite première surface chauffée (3) et orienté vers elle;

— une deuxième surface (8a) chauffée à la même température que la première surface (3), avec la tâche de faciliter le déplacement de la masse cuit de la dite première surface (3);

la dite deuxième surface, étant la surface d'un tambour (8) tournant avec un mouvement unidirectionnel, continuel ou intermittent, à la même vitesse que le premier tambour (4), mais dans la direction opposée;

le dit deuxième tambour (8) étant reliée au dit premier tambour (4) par des moyens de transmission qui en empêchent leur glissement réciproque;

les dits premier (4) et deuxième (8) tambours étant montés sur des axes parallèles entre eux, et

la distance entre les dites première (3) et deuxième (8a) surfaces étant égale à l'épaisseur du produit formé sur la dite première surface (3).

3. Une installation selon la revendication 2 dans laquelle l'on prévoit, comme surface pour la production de masse, une deuxième surface (10), chauffée à la même température d'une première surface (9), qui représente la surface d'un deuxième tambour (21) fonctionnant à la même vitesse et dans la direction opposée qu'un premièr tambour (20) et monté sur un axe parallèle à l'axe du premièr tambour (20), et reliée à ce dernier par des moyens de transmission qui en empêchent leur glissement réciproque,

la dite deuxième surface (10) étant placée à une distance de la première surface (9) égale à la somme des épaisseurs des produits formés par les deux surfaces (9, 10),

les dits moyens de nébulisation (1, 2) étant aussi placés en proximité de la dite deuxième surface (10),

d'ulterieurs moyens de nébulisation (13) étant placés en dessus des dites surfaces (9, 10), en proximité de leur ligne de contact, pour alimenter le mélange de façon à assurer l'union des deux produits.

4. Une installation pour l'accomplissement du procédé selon la revendication 1, consistant en un premier couple de surfaces (3, 8a) selon la revendication 2, placé en dessus d'un deuxième couple de surfaces (9, 10) selon la revendication 3, dans laquelle:

— le produit qui descend du dit premier couple de surfaces (3, 8a) contribue à augmenter l'épaisseur des produits obtenus par les surfaces (9, 10) du dit deuxième couple et à former un produit unifié (14) dont l'épaisseur est égale à la somme des trois produits;

— des nébulisateurs (13) sont placés des deux côtés opposés du produit descendant du dit premier couple de surfaces (3, 8a) et dirigé vers le point de confluence des produits formés séparément par le deuxième couple de surfaces (9, 10);

— des moyens de transmission sont prévus, capables d'empêcher le glissement du dit premier couple de surfaces (3, 8a) par rapport au deuxième couple de surfaces (9, 10);

— la vitesse de rotation est la même pour toutes les surfaces (3, 8a; 9, 10) appartenantes respectivement aux tambours (4, 8; 20, 21).

5. Une installation pour l'accomplissement du procédé selon la revendication 1, caractérisée par:

— une première surface (22) plane chauffée, reliée à un moyen de convoi fourni d'un mouvement unidirectionnel et intermittent;

— moyens de nébulisation (1, 2) du dit mélange placés en dessus de la dite première surface (22) plane chauffée, orienté vers elle et fonctionnant en synchronisme avec le mouvement du moyen de convoi;

— une deuxième surface (23) plane, chauffée à la température de la dite première surface (22), mouvable verticalement de façon à fournir un contact instantané, sans pression, avec le produit obtenu sur la dite première surface (22) dans la phase suivant la nébulisation, le dit mouvement verticale ayant lieu en coïncidence des interruptions du mouvement du moyen de convoi.

6. Une installation selon la revendication 3 et 5, modifiée dans le sens que la dite deuxième surface est une surface cylindrique (24) ayant un mouvement de rotation et non pas de translation, supporté par des moyens connus et chauffée à la température de la première surface (22) plane ayant un mouvement de translation alterné;

— en proximité de la dite surface cylindrique (24), moyens de nébulisation (1, 2) dirigés vers la dite surface cylindrique (24);

— en proximité de la confluence du produit (25, 26) d'ulterieurs moyens de nébulisation (13) étant prévus pour alimenter le mélange de façon à assurer l'union des produits et à former le produit finis (27);

— la dite deuxième surface (24) cylindrique ayant aussi un mouvement de translation, alors que la dite première surface plane (22) reste immobile.

7. Une installation selon les revendications 2 à 5, caractérisée par les dites première et deuxième surfaces chauffées (3, 8a; 9, 10) qui ont un contour ayant la fonction de définir la forme et d'exécuter la coupe du produit pendant leur mouvement réciproque.

8. Une installation selon les revendications 2 à 6, caractérisée par les dits moyens de nébulisation, pourvus de moyens (15) qui limitent l'aire sur la quelle le mélange est distribué, les dits moyens étant pourvus de surfaces (18) isolantes et d'un conduit (19) pour la récupération du mélange.

FIG 1

FIG 2

FIG 4

# FIG 3

# FIG 6

# FIG 5

## FIG 7

## FIG 8